Europäisches Patentamt

(19) European Patent Office (11) Numéro de publication: **0 194 231**

Office européen des brevets **B1**

(12) **FASCICULE DE BREVET EUROPÉEN**

(45) Date de publication du fascicule du brevet: (51) Int. Cl. ⁴:**B 41 B 21/22**, B 41 B 17/06,
17.01.90                                        G 03 B 27/36

(21) Numéro de dépôt: 86810103.1

(22) Date de dépôt: 28.02.86

(54) Dispositif pour exposer des parties discrètes d'une surface photosensible au moyen d'un faisceau de lumière.

(30) Priorité: 04.03.85 CH 964/85

(43) Date de publication de la demande:
10.09.86 Bulletin 86/37

(45) Mention de la délivrance du brevet:
17.01.90 Bulletin 90/03

(84) Etats contractants désignés:
AT BE DE FR GB IT LU NL SE

(56) Documents cité:
DE-A-2 833 682
GB-A-278 149
GB-A-725 699
US-A-2 701 991
US-A-2 978 969
US-A-3 317 269
US-A-3 537 364
US-A-4 148 572

(73) Titulaire: EIE ELECTRONIC INDUSTRIAL EQUIPMENT
S.A.
15, rue Marziano
CH-1227 Carouge (US)

(72) Inventeur: Cerf, Roland
Chemin Crosettes 20
CH-1234 Vessy (CH)
Inventeur: Blanc Jean-Pierre
Résidence de la Côte 40
CH-1110 Morges (CH)
Inventeur: Carrard Francis
Chemin de Montaux
CH-1027 Lonay (CH)
Inventeur: Devenoges Claude
Grosse-Pierre 11
CH-1110 Morges (CH)
Inventeur: Chuard Marcel
Chemin Vert 7d
CH-1217 Meyrin (CH)

(74) Mandataire: Dietlin, Henri
Dietlin & Cie S.A. Rue des Epinettes 19
CH-1227 Genève (CH)

LIBERGRAF, STOCKHOLM 1990

## Description

L'invention a pour objet un dispositif pour exposer des parties discrètes d'une surface photosensible au moyen d'un faisceau de lumière, comprenant un support agencé pour supporter la surface photosensible, une tête optique permettant de diriger et de régler le faisceau lumineux provenant d'une lampe à travers des symboles représentés par des masques distribués sur un disque rotatif vers la surface sensible et des moyens de montage et de déplacement de la tête optique et/ou de la surface sensible.

Les dispositifs pour exposer des parties discrètes ou choisies d'une surface photosensible au moyen d'un faisceau de lumière sont en général utilisés dans l'architecture, dans la cartographie, dans la topographie, etc. Ces dispositifs permettent actuellement de réaliser des plans dans les domaines mentionnés ci-dessus à l'aide d'informations et de données répertoriées dans un ordinateur. Outre les domaines mentionnés ci-dessus, ces dispositifs sont également utilisés pour réaliser des plans de pièces de machines dans la mécanique à partir d'informations codées contenues dans un ordinateur. Une utilisation importante et bien connue à ce jour consiste à utiliser ces dispositifs pour la réalisation de circuits imprimés. Ils répondent au nom de phototraceur. Les phototraceurs connus présentent habituellement une machine à dessiner à commande numérique dans laquelle un mouvement relatif entre le support du dessin et un outil à dessiner est produit suivant un système de coordonnées X - Y. Les déplacements de l'outil à dessiner sont engendrés de façon automatique à partir d'ordres, c'est-à-dire de données provenant, par exemple, d'un ordinateur. L'outil à dessiner est en général une tête à dessiner lumineuse qui se monte sur la machine. Le support du dessin est alors une surface photosensible, sur laquelle on projette un faisceau de lumière. Ce faisceau de lumière peut traverser des symboles, qui sont alors projetés à l'arrêt de la machine à dessiner, tandis que les lignes le sont pendant les déplacements de la tête lumineuse relativement à la surface sensible. Le choix des symboles et des largeurs de trait ainsi que la commande de l'éclairement du faisceau lumineux sont automatiques.

Plusieurs types de phototraceurs à tête lumineuse se trouvent à ce jour sur le marché. Le brevet britannique No. 1 107 981 décrit un dispositif pour tracer automatiquement une ligne en fonction de données enregistrées, ce dispositif comportant deux chariots ou équipages mobiles l'un par rapport à l'autre qui sont entraînés selon des directions X et Y par deux servomoteurs en fonction des données enregistrées. Les équipages mobiles supportent une source de lumière pour projeter un pinceau lumineux sur une surface photosensible. L'appareil comporte aussi un diaphragme à ouverture réglable pour agir sur les dimensions de l'image du faisceau lumineux et un prisme pour faire tourner l'image autour d'un axe compris dans la trajectoire du rayon lumineux, ce qui permet à une image projetée d'être maintenue dans une orientation préférée par rapport à la direction du tracé.

Le brevet français No. 2 061 081 décrit un appareil pour le traçage automatique de lignes en fonction de données enregistrées comportant les coordonnées des points des lignes à tracer exprimées par rapport à des axes de référence. Cet appareil est destiné à être utilisé dans le domaine de la cartographie. Il comporte une source de lumière, des moyens pour projeter un faisceau de lumière sur une surface photosensible, un diaphragme à ouverture réglable située dans le trajet du faisceau lumineux pour agir sur les dimensions de l'image. Il comprend également des moyens mobiles variables en fonction des données pour déplacer automatiquement le dit faisceau et produire une trace d'une ligne à tracer sur la surface photosensible et des moyens pour maintenir à une valeur prédéterminée l'exposition de la dite trace sur la surface photosensible.

Des dispositifs et appareils semblables sont décrits également dans le brevet britannique No. 1 267 824, dans le brevet français No. 2 098 005 et dans le brevet US No. 3 330 182.

On connaît également, par le brevet DE-A-2 833 682 un générateur de légendes sur négatifs avec réglage de la dimension des caractères. Cet appareil d'impression comporte entre autres un disque porteur de masques déplaçable parallèlement au faisceau lumineux, pour autoriser une focalisation automatique.

Dans le brevet américain US-A-2 978 969, on a un dispositif sensiblement analogue, comportant entre autres un objectif formé de deux lentilles, déplaçables le long du faisceau lumineux et de surcroît déplaçables l'une par rapport à l'autre. Le déplacement de l'objectif permet de choisir le facteur d'agrandissement ou de réduction. Une came est prévue pour déplacer les lentilles l'une par rapport à l'autre, assurant ainsi la focalisation.

Dans le brevet US-A-2 701 991, on décrit un dispositif dans lequel l'agrandissement et la réduction sont commandées par un déplacement de la source lumineuse par rapport à la surface sensible, le mouvement de l'objectif étant uniquement la compensation nécessaire pour assurer la focalisation.

Tous ces dispositifs comprennent en général des têtes optiques relativement compliquées avec des diaphragmes, de nombreux films, des prismes ou des miroirs pour dévier le faisceau lumineux et des dispositifs de réglage d'intensité, de netteté, etc. qui rendent le fonctionnement des têtes peu sûr et surtout peu rapide. De plus, les boîtes de ces dispositifs connus consistent en composants qui sont fermement fixés l'un avec l'autre sans être articulés.

Le but de l'invention est de supprimer ces inconvénients et de proposer une tête optique qui est susceptible de travailler avec rapidité et précision et dont le disque rotatif muni des dites masques peut être remplacé sans aucune difficulté.

Ce but est atteint sur la base d'un dispositif pour exposer des parties discrètes d'une surface photosensible disposée sur un support à un faisceau de lumière provenant d'une lampe selon le positionnement d'un obturateur à travers des symboles représentés par des masques distribués sur un disque rotatif muni de moyens de positionnement, ainsi qu'un objectif placé entre le disque portant les masques et la surface sensible, l'objectif étant agencé pour pouvoir se déplacer entre deux limites sur le chemin du faisceau lumineux, et le disque portant les masques étant agencé pour pouvoir également se déplacer entre deux limites parallèlement au faisceau lumineux, un mécanisme étant prévu pour effectuer un déplacement relatif du disque et de l'objectif.

Ce dispositif selon l'invention, est caractérisé en ce que l'objectif, le dispositif de positionnement du disque, le mécanisme de déplacement et le disque sont disposés dans un bâti usiné avec précision et solidaire d'un support, et en ce que la lampe, l'obturateur et son moyen d'entraînement sont placés dans un bloc séparé relié au support par une charnière, ledit disque étant agencé de telle façon qu'il est accessible entre ledit bâti et ledit bloc pour pouvoir être retiré et remplacé du bâti lorsque ledit bloc est éloigné du bâti par rotation sur ladite charnière.

Le mécanisme peut comprendre une came commandée par le déplacement de l'objectif, la came poussant l'axe du disque contre l'action d'un ressort et déplaçant ainsi le disque selon un algorithme définissant le mouvement relatif entre le disque et l'objectif.

Le déplacement de l'objectif placé entre le disque et la surface sensible peut être réalisé au moyen d'une vis tournant dans une plaque-écrou retenant l'objectif et commandé par un moteur pas à pas, la plaque-écrou portant une goupille sur laquelle s'appuie la surface de la came usinée de manière à obéir à l'algorithme de réglage de la position du disque rotatif.

L'objectif et le disque peuvent être commandés par des moteurs pas à pas et l'algorithme peut être programmé dans un microprocesseur

Le disque rotatif portant les masque figurant les symboles peut être commandé par un moteur pas à pas, le disque présentant une succession d'encoches régulièrement espacées sur sa périphérie, chaque encoche étant placée en regard d'un alésage correspondant dans lequel est placé un masque figurant un symbole, le disque étant, après rotation, bloqué dans une position prédéterminée correspondant au choix d'un symbole par une goupille poussée dans l'encoche par l'intermédiaire d'une came mise sous tension d'un ressort, la came étant reliée à un excentrique commandé par un moteur pas à pas.

Un obturateur se présentant sous forme d'une lamelle peut être placé directement à la suite de la lampe, l'obturateur étant commandé par un moteur pas à pas.

Une cellule photo-électrique peut être placée adjacente à la lampe et livrer une tension de référence utilisée pour commander la luminosité de la lampe.

Dans un mode d'exécution préféré, l'axe du disque est enfilé dans un alésage du bâti pour venir en contact avec une came commandée par l'objectif, l'entraînement du disque étant réalisé par une goupille excentrée entrant dans un alésage du disque et montée sur une roue entraînée par un moteur pas à pas, la roue et le moteur étant placés dans le bloc de la lampe et le disque et son axe étant pressés contre la came de l'objectif par une tige centrale placée sous l'action d'un ressort et disposée également dans le bloc de la lampe.

L'objectif peut être un simple objectif du type agrandisseur.

Toujours selon le mode d'exécution préféré, la tête optique est réalisée de manière à s'inscrire dans un cube de 14 cm de côté et la longueur du faisceau lumineux entre la lampe et la surface sensible n'excède pas 10,5 cm. D'autre part, ce faisceau est un faisceau droit sans changement de direction.

La surface sensible peut être disposée sur un tambour rotatif, la tête optique étant montée adjacente au tambour et agencée pour se déplacer le long d'une génératrice du tambour.

Selon une variante, la surface sensible peut être disposée sur un plan, la tête optique étant agencée pour se déplacer parallèlement à ce plan selon deux directions X, Y.

Selon une autre variante, la surface sensible peut être disposée sur un plan, la tête optique étant agencée pour se déplacer adjacente au plan permettant le positionnement dans l'axe X, la table pouvant se déplacer perpendiculairement permettant le positionnement selon l'axe Y.

Le dessin représente, à titre d'exemple, un mode d'exécution du dispositif, objet de l'invention.

Dans le dessin:

La fig. 1 représente schématiquement le chemin parcouru par le faisceau lumineux dans la tête optique depuis la lampe jusqu'à la surface sensible, les constituants de la tête optique étant représentés schématiquement,

la fig. 2 est une demi-vue de face du disque rotatif contenant les masques définissant les symboles,

la fig. 3 est une vue de côté du disque de la fig. 2 avec son axe, sa goupille de blocage et d'entraînement et la tige qui sous l'action d'un ressort pousse le disque et son axe contre la came actionnée en liaison avec le déplacement de l'objectif, et

la fig. 4 est une vue de côté de la tête optique avec son support de fixation et sa charnière.

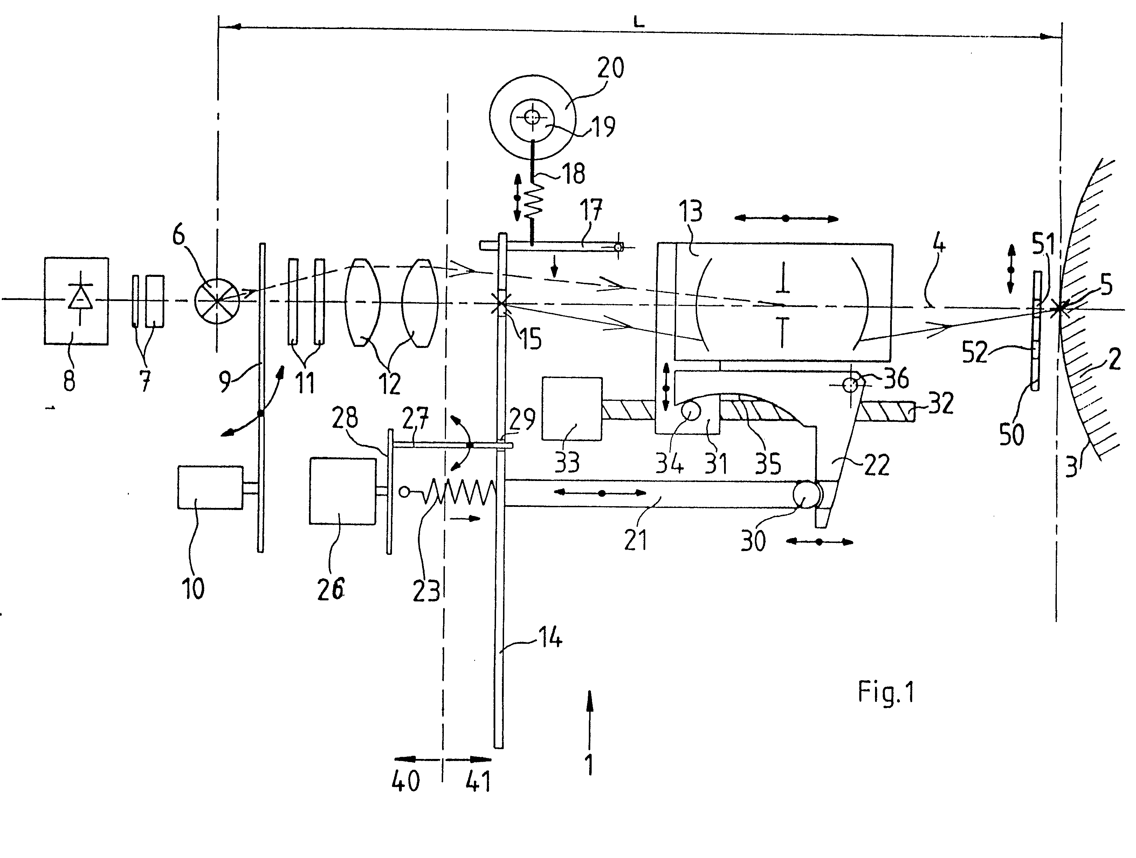

Le dispositif représenté dans la fig. 1 du dessin comprend une tête optique 1 représentant schématiquement tous les éléments constituant la tête et à droite du dessin un tambour 2 sur le manteau duquel est disposée une surface sensible 3, c'est-à-dire une pellicule de film photosensible. La tête optique 1 présente un axe optique 4 qui coupera l'axe du cylindre 2 portant le film photosensible. Le cylindre 2 est monté dans un bâti du dispositif non représenté de manière à pouvoir tourner autour de son axe. Le tambour 2 sera commandé par un dispositif adéquat permettant de le mettre en rotation et de l'arrêter à un emplacement prédéterminé. La tête optique 1 est montée sur un dispositif permettant de la déplacer selon la génératrice 5 du manteau du cylindre 2. Ce déplacement sera réalisé à l'aide d'un dispositif adéquat non représenté, qui fera avancer ou reculer la tête le long de cette génératrice 5 et qui pourra arrêter cette tête à un emplacement prédéterminé.

La tête optique 1 comprend, disposée sur l'axe optique 4, une lampe à incandescence 6 qui servira de source lumineuse à la tête optique 1. Cette lampe à incandescence est une lampe tungstène-halogène et son intensité sera adaptée de manière à sensibiliser correctement le film 3, en fonction des symboles qui seront choisis. A gauche de la lampe 6 sur l'axe 4 sont placés des filtres 7 et une cellule photoélectrique 8. La cellule 8 est agencée pour mesurer et asservir à une valeur de consigne le flux lumineux de la lampe 6, la valeur de consigne dépend du grandissement des symboles à projeter, de la vitesse de déplacement de la cellule 1 relativement au tambour 2, de la vitesse de rotation du tambour, de la sensibilité du film, etc. Les filtres 7 sont agencés pour adapter la sensibilité spectrale de la cellule 8 à celle du film 3. La cellule 8 livrera ainsi une tension de référence qui sera utilisée pour piloter l'alimentation de la lampe 6 en fonction des symboles à sensibiliser sur le film 3.

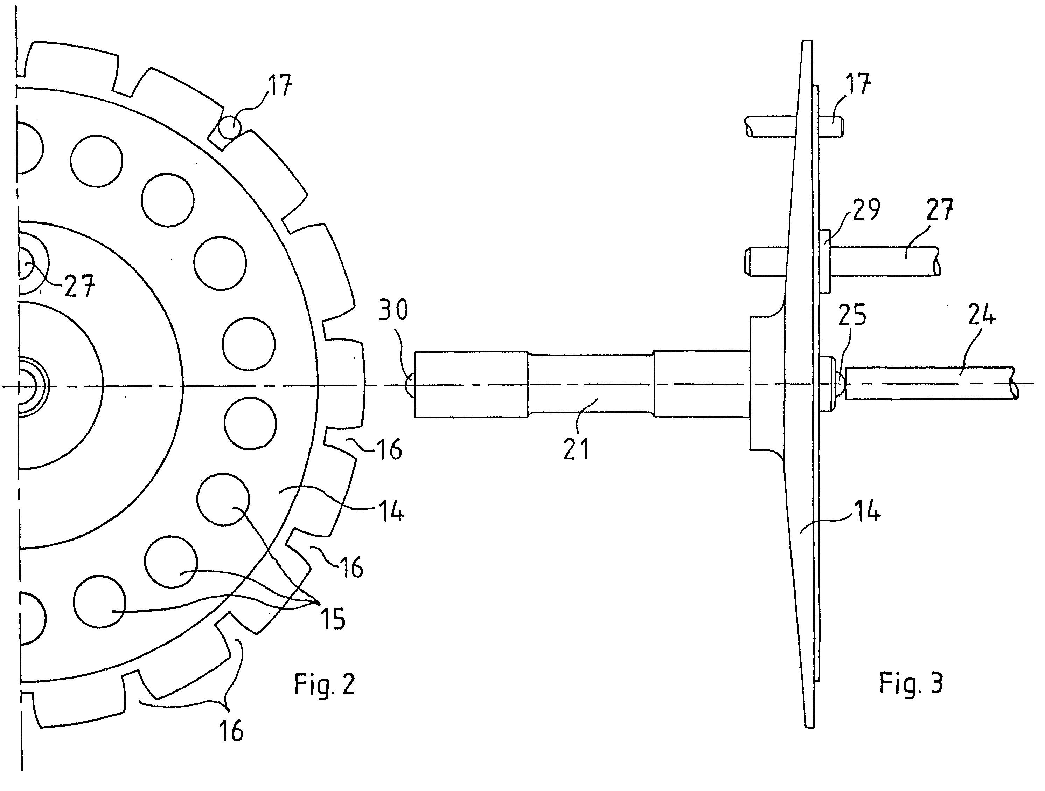

De l'autre côté de la lampe 6 est placée une lame d'obturateur 9 laissant passer ou interrompant le flux lumineux à la droite de la lampe 6. La lamelle d'obturateur 9 est commandée par un moteur pas à pas 10. Sur l'axe optique 4 sont ensuite placés, à la suite de l'obturateur 9, deux filtres 11 destinés à compenser les longueurs d'ondes utiles, c'est-à-dire à déterminer le spectre lumineux utile. Deux condensateurs 12 sont placés à la suite des filtres 11, les condensateurs servant à condenser le flux lumineux de lampe 6 sur un objectif 13. Entre les condensateurs 12 et l'objectif 13 est placé un disque 14 présentant sur sa périphérie des alésages régulièrement espacés 15 qui serviront à recevoir des masques définissant des symboles à projeter sur le film 3 (voir également fig. 2 et 3). Le disque 14 présente en regard de chaque alésage 15 une fente correspondante 16 en forme de V qui servira à positionner le disque relativement à l'axe 4 au moyen d'une goupille 17. La goupille 17 sera amenée dans la fente 16 au moyen d'une tige ressort 18 montée pivotante sur un excentrique 19, lui-même mis en rotation par un moteur pas à pas 20 (fig. 1). La goupille 17 est ainsi poussée dans la fente 16 par la tige ressort 18 lorsque l'excentrique 19 arrive dans la position représentée dans la fig. 1, ce qui assure un positionnement absolu sans jeu avec une force d'appui de la goupille 17 dans la fente qui est faible et constante et qui évite ainsi une usure des fentes 16. Le disque 14 comprend un axe 21 (fig. 1, 2 et 3) monté rotatif et coulissant dans le bâti non représenté de la tête optique 1. Le disque 14 et son axe 21 sont pressés contre une came 22 par l'intermédiaire d'un ressort 23 (fig. 1) et d'un axe de poussée 24 (fig. 3). L'axe de poussée 24 n'est pas représenté dans la fig. 1, qui ne montre les éléments de la tête optique que d'une manière schématique. Par contre, le détail de la pièce de poussée 24 qui s'appuie sur une bille 25 au centre du disque 14 est représenté en détail dans la fig. 3. Le disque 14 (fig. 1) est mis en rotation et arrêté dans une position prédéterminée en fonction du symbole à projeter au moyen d'un moteur pas à pas 26 entraînant par l'intermédiaire d'un engrenage une tige 27 fixée sur un plateau 28 solidaire de l'axe du moteur pas à pas 26. La tige 27 entre dans un alésage 29 prévu dans le disque 14 (voir également fig. 2 et 3). L'extrémité libre de l'axe 21 du disque 14 comprend également une bille 30 destinée à venir pousser la came 22, comme expliqué plus loin.

Après avoir traversé l'alésage 15 contenant un symbole, le faisceau lumineux entre dans l'objectif 13, qui est monté sur une plaque écrou 31, déplacée latéralement par une vis 32 formant l'axe d'un moteur pas à pas 33. L'objectif 13 est un objectif du type agrandisseur de conception relativement simple. Il servira à agrandir et à diminuer la grandeur de la projection des symboles contenus dans les alésages 15 sur la surface sensible du film 3, cette fonction étant réalisée en déplaçant l'objectif 13 le long de l'axe 4 au moyen de la vis 32. La plaque-écrou 31 comprend une goupille 34 sur laquelle s'appuie une surface 35 de la came 22 montée pivotante autour d'un axe fixe 36. La surface usinée 35 de la came 22 est réalisée selon un algorithme calculé de manière à effectuer avec netteté sur le film 3 la projection des symboles déterminés par les masques retenus dans les alésages 15 du disque 14, lorsque l'agrandissement de ces symboles est changé. Il est à préciser ici que l'objectif 13 est calculé de manière à ce que la projection des symboles puisse varier, de manière continue, entre deux limites allant de 0,5 à 1,5 fois la grandeur des dits symboles.

Les symboles sont réalisés sur des films placés dans les alésages 15 du disque 14. Il sont parfaitement connus de l'homme du métier et ne seront pas décrits en détail. La projection de ces symboles se fait de deux manière:

a) par des "flashs", la tête optique étant arrêtée et l'obturateur s'ouvre et se ferme sur un symbole déterminé de manière à le projeter pendant un temps prédéterminé sur la surface sensible du film 3.

b) par des traits où la tête optique et où le tambour 2 se déplacent, l'obturateur étant ouvert, le flux lumineux étant choisi en fonction de la vitesse de déplacement relatif du tambour 2 et de la tête, ainsi qu'en fonction du symbole.

Selon une variante non représentée, le déplacement relatif du disque et de l'objectif selon l'algorithme pourrait être réalisé au moyen de deux moteurs pas à pas effectuant le déplacement de l'objectif et celui du disque. Les moteurs pas à pas seraient alors commandés par un microprocesseur, dans lequel l'algorithme serait programmé.

Il est visible dans la fig. 1 que la source lumineuse 6 et le plan image sur la génératrice 5 du tambour 2 sont à une distance fixe et constante L. Cette distance est déterminée une fois pour toute dans la tête optique et elle ne variera pas. Elle est dans un mode d'exécution préféré du dispositif de 10,5 cm environ. L'homme du métier constatera par conséquent que cette distance L est courte, et que dans le chemin du flux lumineux il n'y a ni diaphragme, ni prisme, ni changement de direction. Le flux lumineux est droit de la lampe à la surface sensible 3. Les symboles étant relativement petits, on dispose ainsi d'une grande luminosité, ce qui permet à la tête optique de travailler à grande vitesse. D'autre part, le fait que le flux lumineux est droit, permet d'éviter toute réflexion et tout défaut lors de la projection des symboles.

La géométrie de l'objectif 13 a été calculée pour que les symboles qui se présentent sous forme de diapositives soient projetés avec netteté sur le film 3 par rétrécissement de l'image dans un rapport approximatif de 1 à 2, et par agrandissement de l'image (symbole) également dans un rapport approximatif de 1,5 à 2, ceci en continu. L'image projetée de chaque symbole peut ainsi aller de moins de la moitié du diamètre du symbole en continu jusqu'à deux fois le diamètre du symbole, soit un rapport réglable en continu de 3 fois. Pour que ces conditions soient remplies, il est nécessaire de déplacer selon un algorithme défini, le disque 14 supportant les diapositives contenant les symboles par rapport à l'objectif 13. Pour réaliser cet algorithme, l'objectif est déplacé parallèlement à l'axe optique par la vis 32 et la plaque écrou 31, la vis étant commandée par un moteur pas à pas 33. L'écrou 31, qui entraîne l'objectif 13 porte la goupille 34 qui s'appuie sur la came 22. La came pousse l'axe 21 du disque 14 en fonction de l'algorithme calculé. Le ressort 23 assure que le disque est toujours en appui sur la came 22. La position de l'objectif 13 qui est commandé par le moteur pas à pas 33 est défini par un ordinateur de commande non représenté de l'unité de traçage. Cet ordinateur commande également toutes les fonctions réalisées par la tête optique, c'est-à-dire les moteurs pas à pas, les choix des symboles, etc....

Le disque 14 et son axe 21 sont poussés par le ressort 23 contre la came 22. La rotation du disque 14, permettant le choix du symbole à projeter, est commandée par le moteur pas à pas 26.

Le positionnement précis du disque 14 est ensuite réalisé grâce au moteur pas à pas 20 qui vient bloquer le disque 14 dans sa position précise à l'aide de la goupille 17 entrant dans la fente 16.

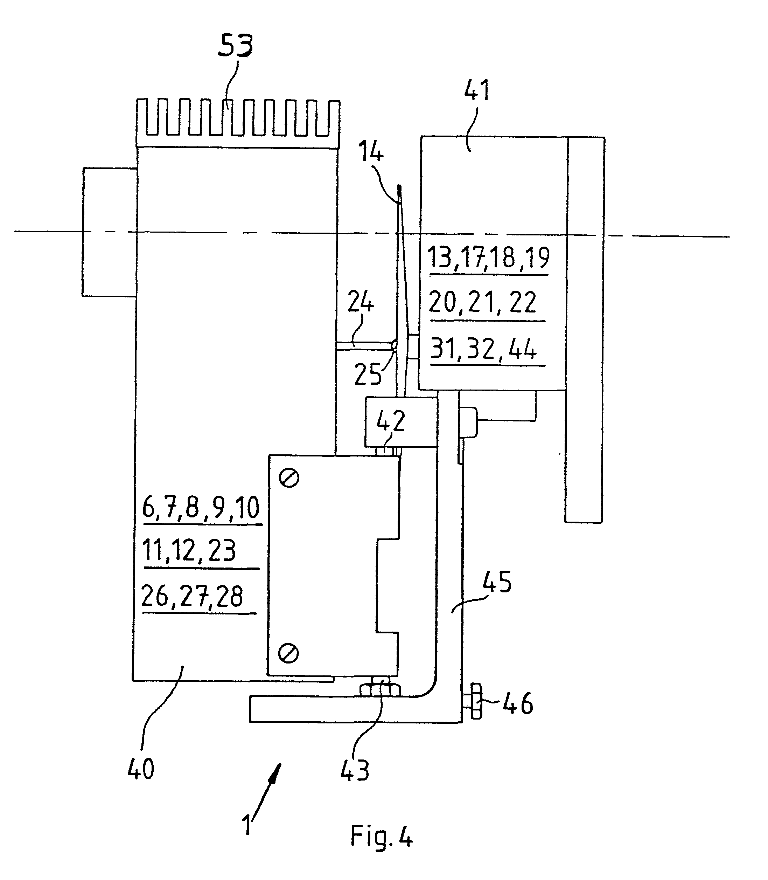

Comme représenté dans les fig. 1 et 4, la tête optique 1 est conçue en deux parties très distinctes 40 et 41. La partie 40 comprend la lampe halogène 6, les filtres 7 et la cellule photoélectrique 8, ainsi que l'obturateur 9 et son moteur pas à pas, les filtres 11, les condensateurs 12, le moteur pas à pas 26 avec son entraînement du disque 14 au moyen de la tige 27 et la tige de poussée 24 qui viendra s'appuyer au centre du disque 14.

La deuxième partie 41 de la tête optique 1 qui est réalisée du point de vue usinage de manière très précise sur le plan mécanique n'est reliée à la partie 40 que par une charnière 42, 43. La partie 41 comprend elle l'axe 21 du disque 14, l'objectif 13 monté sur sa plaque-écrou 31, la vis 32 entraînée par le moteur pas à pas 33, la came 22 et le dispositif de positionnement du disque qui comprend les éléments 17, 18, 19 et 20. Cette conception permet d'isoler thermiquement la partie mécanique précise de la partie lampe qui dégage de la chaleur. Cette disposition permet également de retirer sans problème le disque porte-symboles 14 pour introduire un autre disque en ouvrant la tête optique 1, c'est-à-dire en faisant pivoter le bloc 40 autour des charnières 42 et 43. Lors de ce pivotement tout le bloc 40 et ses éléments ainsi que la tige de poussée 24 s'éloignent du disque 14 qui peut alors être retiré.

Tous les éléments, nécessitant une grande précision mécanique, c'est-à-dire le disque 14, l'objectif, la came 22 ainsi que les moyens de positionnement du disque 17 à 20, sont liés entre eux par une seule pièce du bâti massive en acier, qui comporte tous les usinages précis. Cette pièce une fois réglée est donc indéréglable et la précision est ainsi garantie. Cette pièce est solidaire d'un support 45 qui comporte des butées 46 ajustées à la fabrication, de manière à ce que la mise au point (cote Y) soit la même pour toutes les têtes. La tête 1 peut ainsi à l'aide du support 45 et des butées 46 être montée avec précision sur le dispositif de commande de déplacement de la tête non représenté et de plus peut être remplacé par une nouvelle tête si nécessaire sans réglage préalable. Les têtes optiques sont donc interchangeables sur le dispositif, de même que les disques 14, sans que l'opérateur ait à faire aucun réglage. Ceci permet un dépannage rapide en cas de panne.

La tête optique ainsi réalisée présente donc une unité 40 contenant la lampe 6 qui peut chauffer et se dilater sans perturber le fonctionnement de la tête optique. Cette partie 40 est surmontée par un diffuseur 53 permettant d'évacuer la chaleur de la lampe.

La partie 41 comprenant tous les éléments usinés avec précision reste à la température ambiante et par conséquent ne subit aucune déformation qui pourrait altérer la précision de travail

9

de la tête optique.

La tête optique 1 comprend finalement, comme représenté dans la fig. 1, une pièce 50 placée à la sortie du faisceau lumineux adjacente au tambour 2 portant la surface sensible 3 permettant de placer dans le faisceau optique l'un ou l'autre des verres plans traités antireflet 51 et 52. Ces verres plans permettent de compenser les différences d'épaisseur des films utilisés. Il y a en effet, disponibles dans le commerce, deux films, qui ont respectivement une épaisseur de 0,10 et 0,18 mm. Suivant que l'on choisit l'un ou l'autre des films disponibles dans le commerce, l'utilisateur pourra à l'aide du dispositif 50 effectuer la correction nécessaire.

Comme mentionné plus haut, la tête optique est montée sur un dispositif permettant de la déplacer audessus d'une génératrice du tambour 2 sur laquelle est placée la surface sensible. En variante, il est cependant bien évidemment possible de monter la tête optique sur un chariot apte à la déplacer selon deux directions X et Y. Le chariot permettrait ainsi de déplacer la tête optique 1 au-dessus de la surface sensible qui serait alors disposée sur un plan, la tête optique étant déplacée selon les deux directions parallèlement au plan de la surface sensible, qui serait alors totalement immobile.

Selon une autre variante, la tête optique pourrait être montée fixe, alors que la surface sensible serait montée sur un chariot plan susceptible de se déplacer selon deux directions.

Il a été dit plus haut que le rayon lumineux était droit et ne subissait par conséquent aucun changement de direction. D'autre part, sa longueur a été mentionnée comme étant de 10 cm environ, ce qui permettait d'obtenir une grande luminosité.

Il est finalement à préciser que la tête optique qui vient d'être décrite s'inscrit pour un mode d'exécution préféré dans un cube de 14 cm de côté. Comme mentionné plus haut, ces deux parties 40 et 41 peuvent être séparées l'une de l'autre en tournant autour des charnières 42 et 43 (fig. 4), de sorte que tous les éléments contenus dans les deux parties sont parfaitement et facilement accessibles. Une intervention ou un réglage peut donc se réaliser très facilement.

**Revendications**

1. Dispositif pour exposer des parties discrètes d'une surface photosensible (3) disposée sur un support (2) à un faisceau de lumière (4) provenant d'une lampe (6) selon le positionnement d'un obturateur (9) à travers des symboles représentés par des masques (15) distribués sur un disque rotatif (14) muni de moyens de positionnement (17 à 20), ainsi qu'un objectif (13) placé entre le disque (14) portant les masques et la surface sensible (3), l'objectif (13) étant agencé pour pouvoir se déplacer entre deux limites sur le chemin du faisceau lumineux, et le disque (14) portant les masques étant agencé pour pouvoir

10

également se déplacer entre deux limites parallèlement au faisceau lumineux, un mécanisme (30 à 36) étant prévu pour effectuer un déplacement relatif du disque (14) et de l'objectif (13), caractérisé en ce que l'objectif (13), le dispositif de positionnement (17 à 20) du disque (14), le mécanisme de déplacement (30 à 36) et le disque (14) sont disposés dans un bâti (41) usiné avec précision et solidaire d'un support (45) et en ce que la lampe (6), l'obturateur (9) et son moyen (10) d'entraînement sont placés dans un bloc séparé (40) relié au support (45) par une charnière (42, 43), ledit disque étant agencé de telle façon qu'il est accessible entre ledit bâti et ledit bloc pour pouvoir être retiré et remplacé du bâti lorsque ledit bloc est éloigné du bâti par rotation sur ladite charnière.

2. Dispositif selon la revendication 1, caractérisé en ce que le bloc (40) est surmonté d'un diffuseur de chaleur (53).

3. Dispositif selon la revendication 1, caractérisé en ce que le mécanisme (30 à 36) coopère avec une came (22) commandée par le déplacement de l'objectif (13), la came poussant l'axe (21) du disque contre l'action d'un ressort (23) et déplaçant ainsi le disque (14) selon un algorithme définissant le mouvement relatif entre le disque (14) et l'objectif (13).

4. Dispositif selon la revendication 1, caractérisé en ce que le déplacement de l'objectif (13) placé entre le disque (14) et la surface sensible (3) est réalisé au moyen d'une vis (32) tournant dans une plaque-écrou (31) retenant l'objectif et commandée par un moteur pas à pas (33), la plaque-écrou (31) portant une goupille (34) sur laquelle s'appuie la surface de la came (22) usinée de manière à obéir à l'algorithme de réglage de la position du disque rotatif.

5. Dispositif selon la revendication 1, caractérisé en ce que l'objectif (13) et le disque (14) sont commandés par des moteurs pas à pas (33, 26) et en ce que l'algorithme est programmé dans un microprocesseur.

6. Dispositif selon la revendication 1, caractérisé en ce que le disque rotatif (14) portant les masques figurant les symboles est commandé par un moteur pas à pas (26), le disque (14) présentant une succession d'encoches (16) régulièrement espacées sur sa périphérie, chaque encoche étant placée en regard d'un alésage (15) correspondant dans lequel est placé un masque figurant un symbole, le disque étant, après rotation, bloqué dans une position prédéterminée correspondant au choix d'un symbole par une goupille (17) poussée dans l'encoche par l'intermédiaire d'une tige (18) mise sous tension d'un ressort.

7. Dispositif selon la revendication 1, caractérisé en ce que l'obturateur (9) se présente sous forme d'une lamelle excentrée placée directement à la

EP 0 194 231 B1

11

suite de la lampe (6), l'obturateur étant commandé par un moteur pas à pas (10).

8. Dispositif selon la revendication 1, caractérisé en ce qu'une cellule photoélectrique (8) est placée adjacente à la lampe (6) et livre une tension de référence utilisée pour commander la luminosité de la lampe en fonction des paramètres de vitesse et de sensibilité du film selon un programme de dessin.

9. Dispositif selon la revendication 1, caractérisé en ce que l'axe (21) du disque (14) est enfilé dans un alésage du bâti pour venir en contact avec une came (22) commandée par l'objectif (13), l'entraînement du disque (14) étant réalisé par une goupille (27) excentrée entrant dans un alésage (29) du disque et montée sur une roue (28) entraînée par un moteur pas à pas (26), la roue (28) et le moteur (26) étant placés dans le bloc (40) de la lampe et le disque (14) et son axe (21) étant pressés contre la came (22) de l'objectif par une tige centrale (24) placée sous l'action d'un ressort (23) et disposée également dans le bloc (40) de la lampe (6).

10. Dispositif selon la revendication 1, caractérisé en ce qu'au moins un verre plan (51, 52)) traité antireflet est placé dans le chemin du faisceau lumineux entre l'objectif (13) et la surface sensible (3), le verre plan étant destiné à corriger des différences d'épaisseur de film.

11. Dispositif selon la revendication 1, caractérisé en ce que la longueur du faisceau de lumière entre la lampe (6) et la surface sensible (3) est de 10 centimètres environ, les dimensions de la tête optique (1) s'inscrivant dans un cube de 14 centimètres de côté environ.

12. Dispositif selon la revendication 1, caractérisé en ce que la surface sensible (3) est disposée sur un tambour rotatif (2), la tête optique étant montée adjacente au tambour et agencée pour se déplacer le long d'une génératrice (5) du tambour selon l'axe X, la rotation du tambour permettant le déplacement de la surface photosensible selon l'axe Y.

13. Dispositif selon la revendication 1, caractérisé en ce que la surface sensible est disposée dans un plan, la tête optique étant agencée pour se déplacer adjacente au plan selon deux directions X - Y.

14. Dispositif selon la revendication 1, caractérisé en ce que la surface sensible est disposée sur un plan, la tête optique étant agencée pour se déplacer adjacente au plan permettant le positionnement dans l'axe X, la table pouvant se déplacer perpendiculairement, permettant le positionnement selon l'axe Y.

15. Dispositif selon la revendication 1, caractérisé en ce que l'objectif (13) est choisi de manière

12

à ce que la projection des symboles entre les deux limites soit en continu de 0,5 à 1,5 fois la grandeur des dits symboles.

16. Dispositif selon la revendication 1, caractérisé en ce que les moyens de déplacement entre la tête optique et la surface sensible sont agencés de manière à ce que la distance entre la lampe de la tête et la surface sensible soit une distance fixe et prédéterminée, le chemin lumineux partant de la lampe et traversant le disque et l'objectif pour aboutir à la surface sensible est une ligne droite.

**Patentansprüche**

1. Vorrichtung zum Belichten diskreter Teile einer auf einem Träger (2) angeordneten lichtempfindlichen Oberfläche (3) mit einem Lichtbündel (4), das von einer Lampe (6) je nach Position eines Verschlusses (9) ausgeht und durch von Masken (15) dargestellte Symbole geht, wobei diese Masken auf einer drehbaren Scheibe (14) verteilt sind, die Positionierungsmittel (17 bis 20) sowie ein Objektiv (13) aufweist, das sich zwischen der die Masken tragenden Scheibe (14) und der empfindlichen Oberfläche (3) befindet, wobei sich das Objektiv (13) zwischen zwei Grenzen auf dem Weg des Lichtbündels verschieben kann und sich die die Masken tragende Scheibe (14) ebenfalls zwischen zwei Grenzen parallel zum Lichtbündel verschieben kann, wobei ein Mechanismus (30 bis 36) zum Ausführen einer relativen Verschiebung der Scheibe (14) und des Objektivs (13) vorgesehen ist, dadurch gekennzeichnet, daß das Objektiv (13), die Positionierungsvorrichtung (17 bis 20) der Scheibe (14), der Verschiebemechanismus (30 bis 36) und die Scheibe (14) in einem präzisionsgearbeiteten und einstückig mit einem Träger (45) verbundenen Gestell (41) angeordnet sind, und daß die Lampe (6), der Verschluß (9) und sein Mitnehmermittel (10) sich in einem getrennten, mit dem Träger (45) durch ein Scharnier (42, 43) verbundenen Block (40) befinden, wobei jene Scheibe so ausgeführt ist, daß sie zwischen jenem Gestell und jenem Block zugänglich ist, um von dem Gestell zurückgezogen und ersetzt werden zu können, wenn sich jener Block durch Drehung auf jenem Scharnier vom Gestell entfernt.

2. Vorrichtung nach Anspruch 1, dadurch gekennzeichnet, daß auf dem Block (40) ein Wärmediffusor (53) montiert ist.

3. Vorrichtung nach Anspruch 1, dadurch gekennzeichnet, daß der Mechanismus (30 bis 36) mit einem durch die Verschiebung des Objektivs (13) gesteuerten Nocken (22) zusammenwirkt, wobei der Nocken die Achse (21) der Scheibe gegen die Wirkung einer Feder (23) schiebt und so die Scheibe (14) nach einem, die relative Bewegung zwischen der Scheibe (14) und dem Objektiv (13) festlegenden Algorithmus verschiebt.

4. Vorrichtung nach Anspruch 1, dadurch gekennzeichnet, daß die Verschiebung des sich zwischen der Scheibe (14) und der empfindlichen Oberfläche (3) befindenden Objektivs (13) mittels einer sich in einer Plattenmutter (31) drehenden Schraube (32) bewirkt wird, die das Objektiv haltert und von einem Schrittschaltmotor (33) gesteuert wird, wobei die Plattenmutter (31) einen Stift (34) trägt, auf den sich die Oberfläche des Nockens (22) stützt, die so bearbeitet ist, daß sie dem Regelalgorithmus der Position der drehbaren Scheibe entspricht.

5. Vorrichtung nach Anspruch 1, dadurch gekennzeichnet, daß das Objektiv (13) und die Scheibe (14) von Schrittschaltmotoren (33, 26) gesteuert werden und daß der Algorithmus in einem Mikroprozessor programmiert wird.

6. Vorrichtung nach Anspruch 1, dadurch gekennzeichnet, daß die, die Masken, die die Symbole darstellen, tragende drehbare Scheibe (14) von einem Schrittschaltmotor (26) gesteuert wird, wobei die Scheibe (14) eine Abfolge von regelmäßig auf ihrem Umfang beabstandete Einkerbungen (16) aufweist, wobei jede Einkerbung in bezug auf eine entsprechende Bohrung (15) angeordnet ist, in die eine ein Symbol darstellende Maske gelegt wird, wobei die Scheibe nach der Drehung in einer vorherbestimmten, der Wahl eines Symbols entsprechenden Position durch einen Stift (17) blockiert wird, der mit Hilfe einer durch eine Feder mit Spannung beaufschlagten Stange (18) in die Einkerbung geschoben wird.

7. Vorrichtung nach Anspruch 1, dadurch gekennzeichnet, daß der Verschluß (9) die Form einer exzentrischen, der Lampe (6) direkt nachgeschalteten Lamelle hat, und von einem Schrittschaltmotor (10) gesteuert wird.

8. Vorrichtung nach Anspruch 1, dadurch gekennzeichnet, daß neben der Lampe (6) eine fotoelektrische Zelle (8) angeordnet ist, die eine Bezugsspannung liefert, die zur Steuerung der Leuchtkraft der Lampe in Abhängigkeit von Geschwindigkeits- und Empfindlichkeitsparametern des Films gemäß einem Zeichenprogramm verwendet wird.

9. Vorrichtung nach Anspruch 1, dadurch gekennzeichnet, daß die Achse (21) der Scheibe (14) in eine Bohrung des Gestells eingeführt wird, um mit einem durch das Objektiv (13) gesteuerten Nocken (22) in Berührung zu kommen, wobei die Scheibe (14) durch einen exzentrischen Stift (27) mitgenommen wird, der in eine Bohrung (29) der Scheibe eintritt und auf einem durch einen Schrittschaltmotor (26) mitgenommenen Rad (28) montiert ist, wobei sich das Rad (28) und der Motor (26) im Block (40) der Lampe und der Scheibe (14) befinden und seine Achse (21) durch eine zentrale, unter der Wirkung einer Feder (23) stehende und ebenfalls im Block (40) der Lampe (6) angeordnete Stange (24) gegen den Nocken (22) des Objektivs gedrückt wird.

10. Vorrichtung nach Anspruch 1, dadurch gekennzeichnet, daß sich mindestens ein ebenes, entspiegeltes Glas (51, 52) im Weg des Lichtbündels zwischen dem Objektiv (13) und der empfindlichen Oberfläche (3) befindet, wobei das ebene Glas dazu bestimmt ist, Dickenunterschiede im Film zu korrigieren.

11. Vorrichtung nach Anspruch 1, dadurch gekennzeichnet, daß die Länge des Lichtbündels zwischen der Lampe (6) und der empfindlichen Oberfläche (3) etwa 10 cm beträgt, und die Abmessungen des optischen Kopfes (1) einem Würfel mit etwa 14 cm Seitenlänge entsprechen.

12. Vorrichtung nach Anspruch 1, dadurch gekennzeichnet, daß die empfindliche Oberfläche (3) auf einer drehbaren Trommel (2) angeordnet ist, wobei der optische Kopf in der Nähe der Trommel montiert ist und sich entlang einer Generatrix (5) der Trommel gemäß der X-Achse verschieben kann, wobei sich durch die Drehung der Trommel die lichtempfindliche Oberfläche gemäß der Y-Achse verschieben kann.

13. Vorrichtung nach Anspruch 1, dadurch gekennzeichnet, daß die empfindliche Oberfläche in einer Ebene angeordnet ist und sich der optische Kopf in der Nähe der Ebene in zwei Richtungen X - Y verschieben kann.

14. Vorrichtung nach Anspruch 1, dadurch gekennzeichnet, daß die empfindliche Oberfläche in einer Ebene angeordnet ist, wobei sich der optische Kopf in der Nähe der Ebene verschieben kann, wodurch die Positionierung in der X-Achse zustande kommt, und der Tisch sich senkrecht verschieben kann, wodurch die Positionierung gemäß der Y-Achse zustande kommt.

15. Vorrichtung nach Anspruch 1, dadurch gekennzeichnet, daß das Objektiv (13) so gewählt wird, daß die Symbole zwischen den beiden Grenzen kontinuierlich 0.5 bis 1.5mal so groß projiziert werden.

16. Vorrichtung nach Anspruch 1, dadurch gekennzeichnet, daß die Verschiebemittel zwischen dem optischen Kopf und der empfindlichen Oberfläche so ausgelegt sind, daß es sich beim Abstand zwischen der Lampe des Kopfes und der empfindlichen Oberfläche um einen festen und vorherbestimmten Abstand handelt, wobei der Leuchtweg, der von der Lampe ausgeht, die Scheibe und das Objektiv durchquert und auf die empfindliche Oberfläche auftrifft, eine gerade Linie ist.

## Claims

1. A device for exposing discrete portions of a photosensitive surface (3) disposed on a support (2) to a light beam (4) generated by a lamp (6) according to the positioning of a shutter (9) through symbols represented by masks (15) which are distributed on a rotating disc (14) having positioning means (17 to 20), and an objective (13) disposed between the masks carrying disc (14) and the photosensitive surface (3), the objective (13) being arranged to be moved in the path of said light beam between two limits, and the masks carrying disc (14) being arranged to move too between two limits parallel to said light beam, a mechanism (30 to 36) being provided to effect a movement of the disc (14) relative to the objective (13), characterized by the fact that the objective (13), the positioning means (17 to 20) of the disc (14), the movement mechanism (30 to 36) and the disc (14) are disposed in a precisely manufactured housing (41) which cooperates with a support (45), and by the fact that the lamp (6), the shutter (9) and its command means (10) are disposed in a separate block (40) connected to the support (45) by a hinge (42, 43), said disc being adapted to be accessible between said housing and said block, to be withdrawn from the housing and replaced when said block is removed by rotation about said hinge.

2. The device of claim 1, characterized in that the block (40) is surmounted by a heat diffusor (53).

3. The device of claim 1, characterized in that the mechanism (30 to 36) acts with a cam (22) driven by said moving of the objective (13), the cam being arranged to push the shaft (21) of said disc against the action of a spring (23), thus moving the disc (14) according to an algorithm defining the relative movement between the disc (14) and the objective (13).

4. The device of claim 1, characterized in that the moving of said objective (13) placed between the disc (14) and the sensitive surface (3) is realized by means of a screw (32) rotating in a threaded plate (31) retaining the objective and driven by a stepping motor (33), the threaded plate (31) carrying a pin (34) loaded by the cam surface (22) which is machined in such a manner to respond to the algorithm of the adjustment of the position of the rotating disc.

5. The device of claim 1, characterized in that the objective (13) and the disc (14) are driven by stepping motors (33, 26) and that the algorithm is programmed in a microprocessor.

6. The device of claim 1, characterized in that the rotating disc (14) which carries the symbols constituting masks is driven by a stepping motor (26), said disc having succeeding notches (16) regularly spaced over its periphery, each notch being placed past a corresponding boring (15) wherein a symbol representing mask is placed, said disc being after rotation blocked in a corresponding predetermined position at will of a symbol by a pin (17) pushed into said notch by a rod (18) which is loaded by a spring.

7. The device of claim 1, characterized in that the shutter (9) has the shape of a radially deviated blade placed directly after the lamp (6), said shutter being driven by a stepping motor (10).

8. The device of claim 1, characterized in that a photoelectric cell (8) is placed near the lamp (6) and generates a reference setting used to control the luminosity of said lamp in function of the parameters of speed and film sensitivity according to a drafting program.

9. The device of claim 1, characterized in that the shaft (21) of the disc (14) is inserted into a boring in said housing to come into contact with a cam (22) driven by the objective (13), the rotation of the disc (13) being realized by an eccentric pin (27) entering into a boring (29) in the disc and mounted on a wheel (28) driven by a stepping motor (26), the wheel (29) and the motor (26) being mounted into the lamp block (40), and the disc (14) and its shaft (21) being pushed against the objective cam (22) by a central rod (24) placed under the action of a spring (23) and mounted also into the block (40) of the lamp (6).

10. The device of claim 1, characterized in that at least one anti-reflecting plane glass (51, 52) is placed into the path of the light beam between the objective (13) and the photosensitive surface (3), the plane glass being destined to correct thickness differences of said film.

11. The device of claim 1, characterized in that the length of the light beam between the lamp (6) and the photosensitive surface (3) is about 10 cm, the dimensions of the optical head (1) being comprised within a cube having a side length of about 14 cm.

12. The device of claim 1, characterized in that the photosensitive surface (3) is spread on a rotating drum (2), the optical head being mounted adjacent to said drum and arranged to move along a generating line (5) of the drum according to the X axis, the rotation of the drum allowing the moving of the photosensitive surface according to the Y axis.

13. The device of claim 1, characterized in that the sensitive surface is spread in a plane, the optical head being arranged to move adjacent to that plane according the two X and Y directions.

14. The device of claim 1, characterized in that the sensitive surface is spread in a plane, the optical head being arranged to move adjacent to the plane allowing the positioning in the X axis, the table being mowable perpendicularly and allowing the positioning in the Y axis.

15. The device of claim 1, characterized in that the objective (13) is selected as to allow a projection of the symbols between two limits, namely continuously from 0, 5 to 1, 5 times the size of said symbols.

16. The device of claim 1, characterized in that the means of the moving between the optical head and the sensitive surface are arranged so that the distance between the lamp of the head and the sensitive surface is a fixed and predeterminated distance, the luminous path starting from the lamp and going through the disc and the objective to strick the sensitive surface being a straight line.

Fig.1

Fig. 2

Fig. 3

EP 0 194 231 B1

53

41

14

13,17,18,19

20,21,22

31,32,44

24

25

42

6,7,8,9,10

11,12,23

26,27,28

45

40

1

43

46

Fig. 4